# EUROPEAN PATENT SPECIFICATION

(11) **EP 3 133 347 B1**
(45) Date of publication and mention of the grant of the patent: **19.09.2018**
(21) Application number: 15881417.8
(22) Date of filing: 02.12.2015
(51) Int. Cl.: F24C 3/12, F23D 14/72, F23N 5/24

(54) **SAFETY PROTECTION DEVICE REGULATOR**
REGLER FÜR SICHERHEITSVORRICHTUNG
RÉGULATEUR DE DISPOSITIF DE PROTECTION DE SÉCURITÉ

(30) Priority: 15.07.2015 CN 201520519231 U
(43) Date of publication of application: 22.02.2017
(73) Proprietor: Maxsun (Dalian) Co., Ltd, Jinzhou District Dalian Liaoning 116100 (CN)
(72) Inventor: CHUNG, Hae Goog, Dalian Liaoning 116100 (CN)
(74) Representative: Hanna Moore + Curley
(86) International application number: PCT/CN2015/096210
(87) International publication number: WO 2017/008429

(56) References cited:
- WO-A1-2014/129678
- CN-A- 1 503 888
- CN-A- 102 278 488
- CN-A- 102 278 488
- CN-U- 202 419 726
- CN-U- 203 442 250
- CN-Y- 2 169 790
- CN-Y- 2 169 790
- KR-B1- 101 410 057
- KR-B1- 101 410 057
- US-A1- 2005 028 804
- US-A1- 2011 265 780

## Description

### Technical Field

The present invention relates to a type of regulator for safety devices.

### Background Technology

The valve body adopted in the current technologies is basically a single fold protection device, namely an overpressure or a flow path cutout safety device. The overpressure cutout safety device fits with external parts through a safety pressure device equipped in a valve body, and when the safety pressure of a gas container exceeds the safety pressure of the valve body, the safety device is triggered to separate the gas container from the valve body; the flow path cutting safety device is a protective device with a preset safety pressure in the valve body, and when the pressure of the gas container exceeds the safety pressure of the valve body, the safety device becomes active. When components of the valve body are deformed or any other problems occur, neither of these two types of safety devices can be triggered normally, which will result in a continuous increase of pressure in a gas container, and poses a serious latent danger of explosion of the gas container.

Documents CN102278488 and KR101410057 both disclose safety device regulators according to the prior art.

### Summary of the Present Invention

The present invention aims to provide a safety device regulator. In order to achieve the purpose, the present invention provides a technical solution described as follows: A safety device regulator comprises a pressure adjusting plate, a safety pin rod, a safety pin, an initiation disk, a safety disk, an admission piece, an air outlet, a valve stem, a safety pin rod spring, a safety disk tension spring, a regulator body and a transmission shaft; said pressure adjusting plate is connected with said valve stem; said valve stem is connected with said regulator body; said safety pin rod is connected with said regulator body; said safety pin rod spring is connected with said safety pin rod; said initiation disk is connected with said regulator body; said safety disk is in contact with a groove on said safety pin rod; said safety disk tension spring is connected with said safety disk; said admission piece and said air outlet are both installed on said regulator body; said transmission shaft is connected with said regulator body.

An electromagnetic valve is installed on said regulator body, and a copper rivet located between said electromagnetic valve and said initiation disk.

A safety bracket is installed on said regulator body.

O-shaped seal rings are installed on said safety pin rod.

An air vent is installed in said regulator body; said air vent extends to said pressure adjusting plate.

The present invention provides a safety device regulator, whose valve body cooperate with the gas container to generate an overpressure and flow path cutout safety protection, when the pressure of a gas container exceeds the preset safety pressure of a valve body, the overpressure cutout device and the flow path cutout device are triggered to separate the gas container from the valve body or cut off the gas influx; in addition, it can further comprises an electromagnetic valve. When fire from a burner is extinguished due to wind or other factors, the electromagnetic valve becomes active to cut off gas from the valve body to further ensuring the safety.

### Description of Drawings

Figure 1 is the schematic structural view 1 of the safety device regulator of the present invention;
Figure 2 is the schematic structural view 2 of the safety device regulator of the present invention;
Figure 3 is the schematic structural view 3 of the safety device regulator of the present invention;
Figure 4 is the schematic structural view 4 of the safety device regulator of the present invention;
Figure 5 is the schematic structural view 5 of the safety device regulator of the present invention;
Figure 6 is the schematic structural view 6 of the safety device regulator of the present invention;
Figure 7 is the schematic structural view 7 of the safety device regulator of the present invention;
Figure 8 is the schematic structural view 8 of the safety device regulator of the present invention;
Figure 9 is the schematic structural view 9 of the safety device regulator of the present invention; and
Figure 10 is the schematic structural view 10 of the safety device regulator of the present invention.

In those drawings: 1. pressure adjusting plate; 2. safety pin rod; 3. safety pin; 4. electromagnetic valve; 5. initiation disk; 6. copper rivet; 7. safety disk; 8. safety bracket; 9. admission piece; 10. air outlet; 11. valve stem; 12. safety pin rod spring; 13. O-shape seal ring; 14. safety disk tension spring; 15. regulator body; 16. transmission shaft; 17. air vent.

### Detailed Description of Illustrated Embodiments

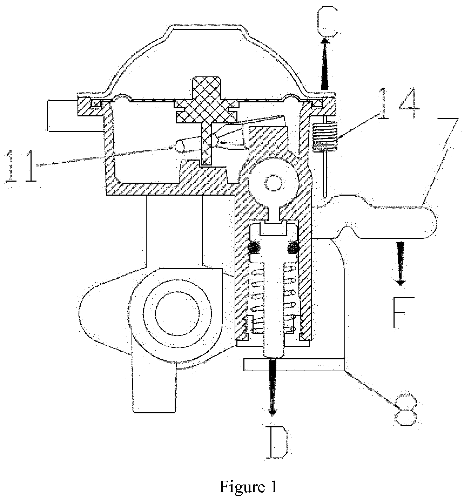

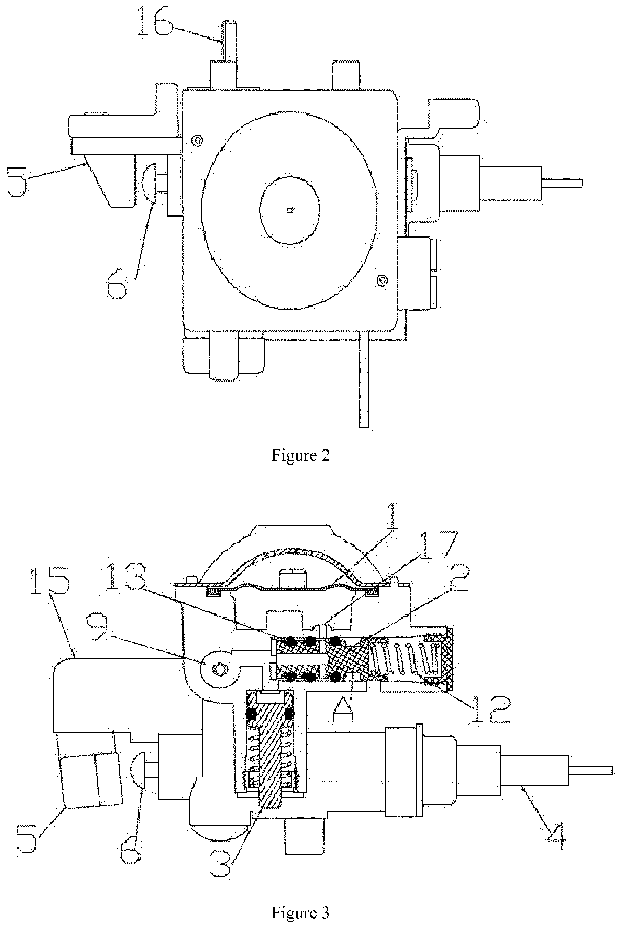

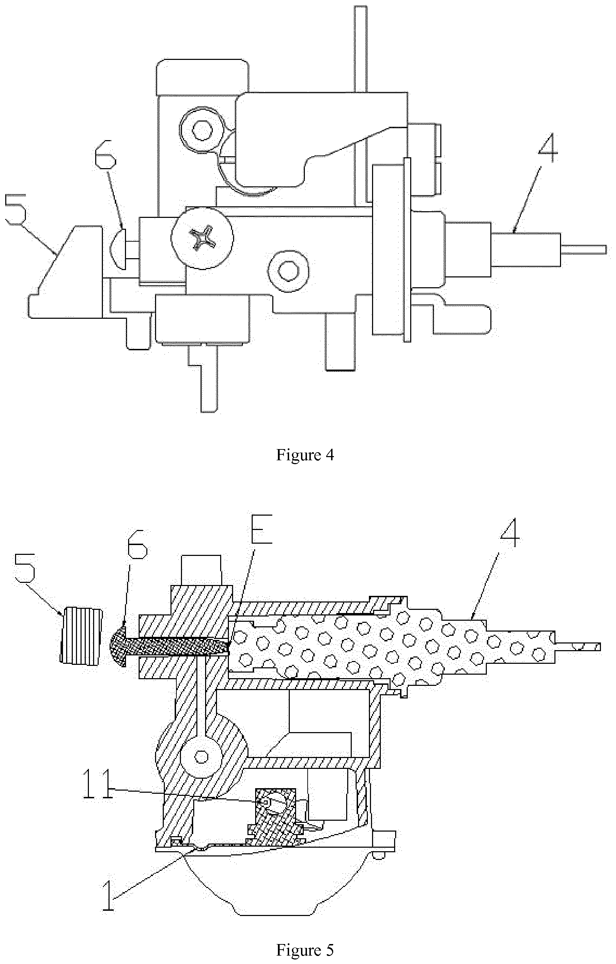

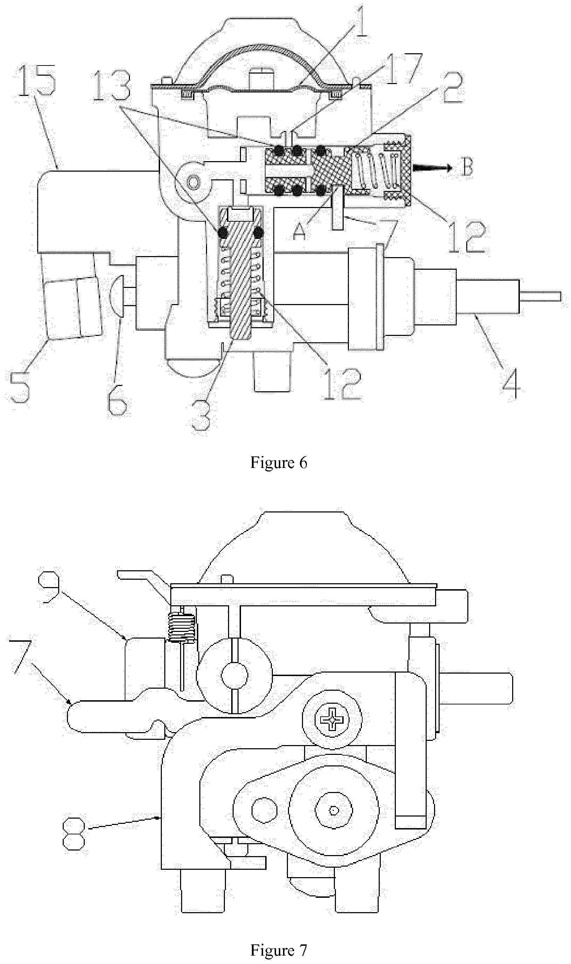

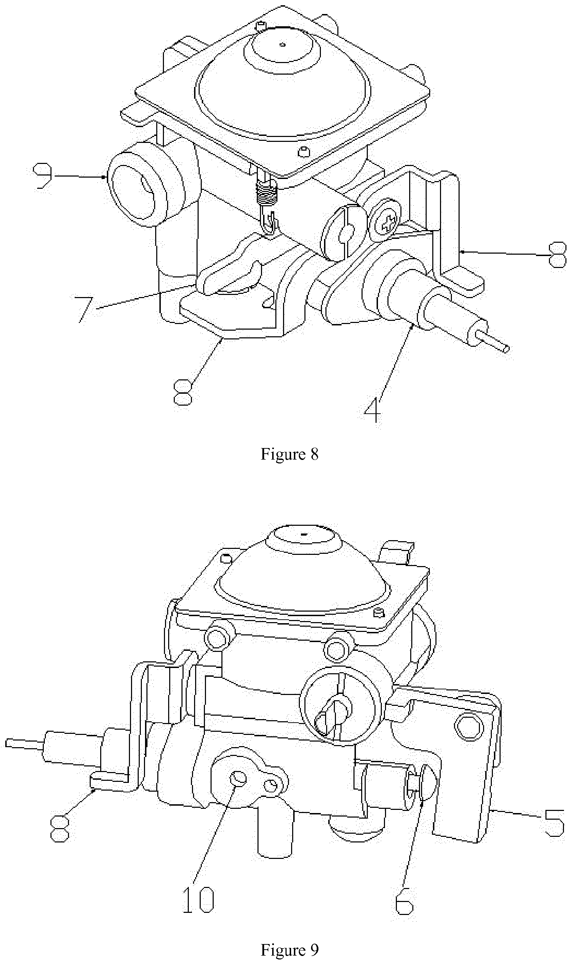

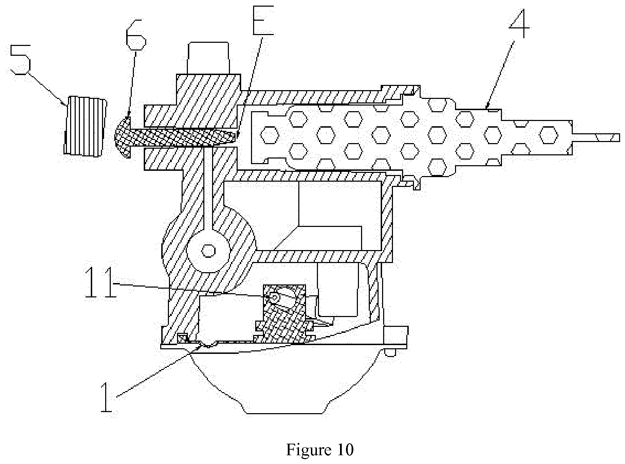

As shown in Figure 1-10, a safety device regulator comprises a pressure adjusting plate 1, a safety pin rod 2, a safety pin 3, an electromagnetic valve 4, an initiation disk 5, a safety disk 7, an admission piece 9, an air outlet 10, a valve stem 11, a safety pin rod spring 12, a safety disk tension spring 14, a regulator body 15 and a transmission shaft 16. The pressure adjusting plate 1 is connected with the valve stem 11. The valve stem 11 is connected with the regulator body 15. The safety pin rod 2 is connected with the regulator body 15. The safety pin rod spring 12 is connected with the safety pin rod 2. The electromagnetic valve 4 and an initiation disk 5 are both connected with the regulator body 15. The safety disk 7 is in contact with a groove of the safety pin rod 2. The safety disk tension spring 14 is connected with the safety disk 7. The admission piece 9 and the air outlet 10 are both installed on the regulator body 15. The transmission shaft 16 is connected with the regulator body 15. A copper rivet 6 is located between the electromagnetic valve 4 and the initiation disk 5. The regulator body 15 is equipped with a safety bracket 8. The safety pin rod 2 is equipped with O-shape seal rings 13. The regulator body 15 is equipped with an air vent 17, and the air vent 17 extends to the pressure adjusting plate 1. A gas container is connected with the admission piece 9. Gas enters from the admission piece, and is delivered to two different directions through the internal structure of the regulator. The gas enters the safety pin rod through an internal opening of the safety pin rod, and then enters the regulator through the air vent that connects to the pressure adjusting plate to keep in contact with the pressure adjusting plate. When an air admission input pressure exceeds the preset pressure of the safety device regulator, the first safety mechanism, the pressure adjusting plate is triggered. Because the pressure adjusting plate and the valve stem are connected with the regulator body, under high pressure conditions, the pressure adjusting plate drives the valve stem to cut off the gas from the admission piece 9 to avoid the gas from entering the inside of the regulator. The second safety mechanism comprises the safety pin rod. The safety pin rod is connected with the regulator body. The safety pin rod spring is connected with the safety pin rod. The safety pin rod is equipped with O-shape seal rings. When the valve stem cuts off the gas, the pressure of the gas will turn to the safety pin rod to push the safety pin rod to move in B direction. The safety disk is driven by the safety disk tension spring to keep moving in C direction. When the safety pin rod moves a certain distance, the safety disk is in contact with a groove at a location A of the safety pin rod to form a lockup state to prevent the safety pin rod from moving, and two of the O-shape seal rings cut off gas from escaping. As a result, the gas is prevented from entering the inside of the regulator through the internal opening of the safety pin rod. To reuse the safety pin rod, firstly, it is required to take the gas container out and press the safety disk in F direction, the safety pin rod is moved by the safety pin rod spring to a normal state. As to the safety pin and the safety bracket, after the safety pin rod enters the lockup state, the gas pressure will transfer to the safety pin to move the safety pin in D direction. When the safety pin is moving, the safety bracket moves accordingly. When the safety bracket moves to a certain distance, the gas container is separated from the admission piece to cut off gas influx and prevent gas from entering the regulator, which constitutes a second layer of protection. The third safety mechanism comprises the electromagnetic valve and the regulator body. The electromagnetic valve and the initiation disk are both connected with the regulator body. The copper rivet is located between the electromagnetic valve and the initiation disk. When the safety mechanism is triggered, the initiation disk pushes the copper rivet and the copper rivet pushes the electromagnetic valve to allow gas entering from E location. Gas is delivered through an air outlet to air outlet 10, which is connected to other connecting parts. When the electromagnetic valve is disconnected, the electromagnetic valve will come in contact with E location to cut off gas and prevent gas from coming out through the air outlet.

The abovementioned multiple protection mechanisms provide much safer protections on products and people. In the safety device regulator in the present utility model, the valve body cooperates with the products to generate an overpressure and flow path cutout safety protection, when the pressure of a gas container exceeds the preset safety pressure of the valve body, the overpressure cutout safety device and the flow path cutout safety device are triggered to separate the gas container from the valve body or cut off gas influx. In addition, the regulator can further comprise the electromagnetic valve protection. When fire from a burner is extinguished due to wind or other factors, the electromagnetic valve becomes active to cut off gas from the valve body to further ensuring the safety.

## Claims

1. A safety device regulator comprising: a pressure adjusting plate (1), a safety pin rod (2), a safety pin (3), an initiation disk (5), a safety disk (7), an admission piece (9), an air outlet (10), a valve stem (11), a safety pin rod spring (12), a safety disk tension spring (14), a regulator body (15) and a transmission shaft (16); said pressure adjusting plate is connected with said valve stem; said valve stem is connected with said regulator body; said safety pin rod is connected with said regulator body; said safety pin rod spring is connected with said safety pin rod; said initiation disk is connected with said regulator body; said safety disk is in contact with a groove on said safety pin rod so as to form a lockup state to prevent the safety pin rod from moving; said safety disk tension spring is connected with said safety disk; said admission piece and said air outlet are both installed on said regulator body; said transmission shaft is connected with said regulator body.

2. A safety device regulator according to claims 1 further comprising: an electromagnetic valve (4) installed on said regulator body, and a copper rivet (6) located between said electromagnetic valve and said initiation disk (5).

3. A safety device regulator according to claims 1 further comprising: a safety bracket (8) installed on said regulator body.

4. A safety device regulator according to claims 1 further comprising: O-shaped seal rings (13) installed on said safety pin rod (2).

5. A safety device regulator according to claims 2 further comprising: an air vent (17) installed in said regulator body, said air vent extends to said pressure adjusting plate (1).

## Patentansprüche

1. Sicherheitsvorrichtungsregler, umfassend: eine Druckeinstellplatte (1), einen Sicherheitsstiftbolzen (2), einen Sicherheitsstift (3), eine Initiationsscheibe (5), eine Sicherheitsscheibe (7), ein Zutrittsstück (9), einen Luftauslass (10), einen Ventilschaft (11), eine Sicherheitsstiftbolzenfeder (12), eine Sicherheitsscheibenzugfeder (14), einen Reglerkörper (15) und eine Übertragungswelle (16); wobei die Druckeinstellplatte mit dem Ventilschaft verbunden ist; der Ventilschaft mit dem Reglerkörper verbunden ist; der Sicherheitsstiftbolzen mit dem Reglerkörper verbunden ist; die Sicherheitsstiftbolzenfeder mit dem Sicherheitsstiftbolzen verbunden ist; die Initiationsscheibe mit dem Reglerkörper verbunden ist; die Sicherheitsscheibe mit einer Rille auf dem Sicherheitsstiftbolzen in Kontakt ist, um einen Blockierzustand zu bilden, um die Bewegung des Sicherheitsstiftbolzens zu verhindern; die Sicherheitsscheibenzugfeder mit der Sicherheitsscheibe verbunden ist; das Zutrittsstück und der Luftauslass beide auf dem Reglerkörper installiert sind; die Übertragungswelle mit dem Reglerkörper verbunden ist.

2. Sicherheitsvorrichtungsregler nach Anspruch 1, ferner umfassend: ein elektromagnetisches Ventil (4), das auf dem Reglerkörper installiert ist, und einen Kupferniet (6), der sich zwischen dem elektromagnetischen Ventil und der Initiationsscheibe (5) befindet.

3. Sicherheitsvorrichtungsregler nach Anspruch 1, ferner umfassend: eine Sicherheitshalterung (8), die auf dem Reglerkörper installiert ist.

4. Sicherheitsvorrichtungsregler nach Anspruch 1, ferner umfassend: O-förmige Dichtungsringe (13), die auf dem Sicherheitsstiftbolzen (2) installiert sind.

5. Sicherheitsvorrichtungsregler nach Anspruch 2, ferner umfassend: eine Luftöffnung (17), die in dem Reglerkörper installiert ist, wobei sich die Luftöffnung zu der Druckeinstellplatte (1) erstreckt.

## Revendications

1. Régulateur de dispositif de sécurité comportant : une plaque de réglage de pression (1), une tige de goupille de sécurité (2), une goupille de sécurité (3), un disque de déclenchement (5), un disque de sécurité (7), une pièce d'admission (9), un orifice de sortie d'air (10), une tige de vanne (11), un ressort de tige de goupille de sécurité (12), un ressort de tension de disque de sécurité (14), un corps de régulateur (15) et un arbre de transmission (16) ; ladite plaque de réglage de pression est connectée à ladite tige de vanne ; ladite tige de vanne est connectée audit corps de régulateur ; ladite tige de goupille de sécurité est connectée audit corps de régulateur ; ledit ressort de tige de goupille de sécurité est connecté à ladite tige de goupille de sécurité ; ledit disque de déclenchement est connecté audit corps de régulateur ; ledit disque de sécurité est en contact avec une rainure sur ladite tige de goupille de sécurité de manière à former un état de verrouillage pour empêcher la tige de goupille de sécurité de bouger ; ledit ressort de tension de disque de sécurité est connecté audit disque de sécurité ; ladite pièce d'admission et ledit orifice de sortie d'air sont tous les deux installés sur ledit corps de régulateur ; ledit arbre de transmission est connecté audit corps de régulateur.

2. Régulateur de dispositif de sécurité selon la revendication 1, comportant par ailleurs : une vanne électromagnétique (4) installé sur ledit corps de régulateur, et un rivet en cuivre (6) situé entre ladite vanne électromagnétique et ledit disque de déclenchement (5).

3. Régulateur de dispositif de sécurité selon la revendication 1, comportant par ailleurs : un support de sécurité (8) installé sur ledit corps de régulateur.

4. Régulateur de dispositif de sécurité selon la revendication 1, comportant par ailleurs : des joints toriques (13) installés sur ladite tige de goupille de sécurité (2).

5. Régulateur de dispositif de sécurité selon la revendication 2, comportant par ailleurs : un évent (17) installé dans ledit corps de régulateur, ledit évent s'étend jusqu'à ladite plaque de réglage de pression (1).
